(19) Europäisches Patentamt
European Patent Office
Office européen des brevets

(11) **EP 1 877 471 B1**

(12) **EUROPÄISCHE PATENTSCHRIFT**

(45) Veröffentlichungstag und Bekanntmachung des Hinweises auf die Patenterteilung:
**15.07.2009 Patentblatt 2009/29**

(21) Anmeldenummer: **06707649.7**

(22) Anmeldetag: **28.03.2006**

(51) Int Cl.:
***C08J 5/18*** (2006.01)   ***C08L 67/02*** (2006.01)

(86) Internationale Anmeldenummer:
**PCT/EP2006/002804**

(87) Internationale Veröffentlichungsnummer:
**WO 2006/103044 (05.10.2006 Gazette 2006/40)**

(54) **FORMMASSE AUS EINER POLYESTERHARZZUSAMMENSETZUNG, FOLIE HERGESTELLT AUS DER FORMMASSE UND VERFAHREN ZUR HERSTELLUNG EINER FOLIE ODER EINER FOLIENBAHN**

MOULDING COMPOUND CONSISTING OF A POLYESTER RESIN COMPOSITION, FILM PRODUCED FROM THE MOULDING COMPOUND AND METHOD FOR PRODUCING A FILM OR FILM WEB

MATIERE MOULABLE D'UNE COMPOSITION DE RESINE DE POLYESTER, FILM PRODUIT A PARTIR DE CETTE MATIERE ET PROCEDE DE PRODUCTION D'UNE FEUILLE CONTINUE

(84) Benannte Vertragsstaaten:
**AT CH DE DK ES FI FR GB IT LI LT PL SE**

(30) Priorität: **31.03.2005 DE 102005014636**

(43) Veröffentlichungstag der Anmeldung:
**16.01.2008 Patentblatt 2008/03**

(73) Patentinhaber: **Klöckner Pentaplast GmbH & Co. KG**
**56412 Heiligenroth (DE)**

(72) Erfinder:
• **GRIGO, Thorsten**
**84576 Teising (DE)**

• **NIEGL, Max**
**81247 München (DE)**
• **DEIRINGER, Günter**
**84556 Kastl (DE)**

(74) Vertreter: **Zounek, Nikolai et al**
**Plate Schweitzer Zounek**
**Patentanwälte**
**Rheingaustrasse 196**
**65203 Wiesbaden (DE)**

(56) Entgegenhaltungen:
**EP-A- 1 066 339         WO-A-03/035726**
**US-A- 4 442 262         US-A1- 2004 157 069**

**Beschreibung**

Die Erfindung betrifft eine Formmasse aus einer Polyesterharzzusammensetzung enthaltend mindestens 80 Mol% einer Disäurerestkomponente und 80 bis 100 Mol% einer Diolrestkomponente, ausgewählt aus Diolen mit 2 bis 10 C-Atomen und 0 bis 20 Mol% eines modifizierenden Diols, Wachsen, gegebenenfalls Mattierüngsmitteln und polymeren Modifizierungsmitteln auf Basis von ABS-Komponenten sowie eine Folie, hergestellt aus der Formmasse und die Verwendung der Folie.

Aus der Formmasse wird durch Plastifizieren und anschließendes Extrudieren durch eine Düse oder durch Kalandrieren eine Folie oder Folienbahn hergestellt, die inline oder offline, beispielsweise durch Verstrecken und/oder Prägen, weiter verarbeitet wird.

Plastifizierte und starre Polyesterharzzusammensetzungen werden bekannter Weise durch Zugabe verschiedener Additive modifiziert, um gewünschte Eigenschaftsprofile der daraus hergestellten Folien oder Folienbahnen zu erhalten. Bekannte Polyesterharzzusammensetzungen können warm verformt werden und sind für eine Vielzahl von Anwendungen, beispielsweise als Verpackungs-, Schrumpf- und Hartfolien geeignet. Für die Modifizierung derartiger Polyesterfolien werden Modifizierungsmittel zur Verbesserung der Schlagzugzähigkeit, zur Verbesserung der Wärmebeständigkeit, Arbeitshilfsmittel zur Verbesserung der Verarbeitbarkeit und des Ausstoßes der Produktionsanlage, Gleitmittel zur Verbesserung des Gelierverhaltens während der Fertigung, Fließhilfsmittel zur Verbesserung der Thermoformbarkeit und Verstreckbarkeit, Mattierungsmittel zur Reduzierung des Glanzes und dergleichen zugesetzt. Die Gewichtsanteile der einzelnen Additive liegen je nach Anforderung zwischen 0,1 und gleich/größer 40 Gew.-%. Bei den Additiven kommen bevorzugt Copolymere des Basispolymers zum Einsatz, die in der Regel sehr teuer sind, in hohen Konzentrationen eingesetzt werden müssen und auch häufig die Verbesserungen der Eigenschaftsprofile nicht im gewünschten Maße beiführen.

Die EP 1 066 339 B1 beschreibt ein Verfahren zur Herstellung einer Folie oder eines Blattes aus einer Polyesterharzzusammensetzung durch Kalandrieren. Die Polyesterkomponente des Harzes ist ein amorpher oder halbkristalliner Polyester, der eine Kristallisationshalbwertzeit aus einem geschmolzenen Zustand von mindestens 5 min aufweist. Die Polyesterkomponente besteht aus mindestens 80 Mol% einer Disäurerestkomponente, aus 80 bis 100 Mol% einer Diolrestkomponente und 0 bis 20 Mol% eines modifzierenden Diols. Die Disäurerestkomponente basiert auf 100 Mol% Disäurerest und der Diolrest basiert auf 100 Mol% Diolrest. Die Harzzusammensetzung schließt Additive ein, die beispielsweise ein internes Gleitmittel, Antirutschmittel oder eine Mischung hiervon, Mattierungsmittel sein können. Die Menge des jeweils zugesetzten Additivs liegt zwischen 0,01 bis 10 Gew.-% auf Basis des Gesamtgewichtes der Harzzusammensetzung.

Derartige amorphe oder halbkristalline Polyesterharzzusammensetzungen sind zum Kalandrieren mit Hilfe herkömmlicher Kalandrierverfahren zur Herstellung von Folien oder Blättern überraschender Weise geeignet. Solche Polyesterharzzusammensetzungen werden unter dem Markennamen Cadence® der Firma Eastman Chemical Co., Tennessee, USA, vertrieben. Die Polyesterzusammensetzungen werden üblicher Weise für die Herstellung von Polyesterfolien als Basispolymere in der Regel mit über 96 Gew.-%, bezogen auf das Gesamtgewicht der Polyesterfolien, eingesetzt.

Aus der EP 0 655 320 B1 ist eine gewellte Folie aus mindestens 50 Gew.-% PET und 10 bis 45 Gew.-% Füllstoffe sowie 5 bis 20 Gew.-% Gummi bekannt, die einen Kristallinitätsgradienten über die Foliendicke besitzt. Die Füllstoffe sind mineralische Füllstoffe, ausgewählt aus der Gruppe umfassen Quarz, Calciumcarbonat, Talkum, Titandioxid, Glasfasern und Mischungen hiervon. Die Folie wird vor allem für Bauzwecke eingesetzt.

Die DE 102 56 493 A1 betrifft thermisch aktivierbare Beschichtungszusammensetzung, die gegen alle Papierarten, gegen Kunststoff und gegen Metalle und auch gegen sich selbst siegelfähig ist. Die Beschichtungszusammensetzung ist auf Basis eines Ethylen-Acrylatpolymers oder eines Ethylen-Methacrylatpolymers, gegebenenfalls modifiziert mit Polyester oder Polyamid, aufgebaut, wobei der Anteil des Basispolymeren 40 bis 96,5 % beträgt. Die Zusammensetzung kann außerdem Polyvinylchlorid und/oder Polyvinylacetat und/oder Polyurethandispersionen enthalten.

Aus der DE 100 58 133 A1 sind Formmassen aus einem kautschukelastischen Polymerisat A und mindestens einem thermoplastischen Polymer B bekannt. Das thermoplastische Polymer B ist aus vinylaromatischen Polymeren, Polymeren auf Basis von Methylmethacrylat, Polyestern, Polymeren auf Basis von Imiden, oder deren Mischungen ausgewählt. Die kautschukhaltige thermoplastische Formmasse ist ein Acrylnitril-Butadien-Styrol-Polymer (ABS), ein Acrylnitril-Styrol-Acrylester-Polymer(ASA), ein Methylmethacrylat-Acrylnitril-Butadien-Styrol-Polymer (MABS), oder ein Acrylnitril-(Ethylen-Propylen)-Styrol-Polymer (AES). Aus der Formmasse werden Formteile, Folien, Fasern und Schäume hergestellt, wobei die Formteile Spritzgussformteile sind.

Additive, die für die Verwendung bei den erfindungsgemäßen Folien geeignet sind, werden allgemein beim Kalandrieren von Polymeren wie PVC, Polyester eingesetzt.

Aus der EP 1 066 339 B1 ist es beispielsweise bekannt, als Additiv Gleitmittel oder Antirutschmittel der Polyesterharzzusammensetzung hinzu zu fügen, wobei der Anteil dieser Additive zwischen 0,01 bis 10 Gew.-% auf Basis des Gesamtgewichtes der Polyesterharzzusammensetzung gewählt ist. Des Weiteren können die Polyesterharzzusammensetzungen einen oxidativen Stabilisator und einen Schmelzfestigkeitsverbesserer, enthalten.

Aufgabe der Erfindung ist es eine Formmasse zur Herstellung von Folien und Folienbahnen auf der Basis einer Polyesterharzzusammensetzung bereitzustellen, derart, dass bei den Folien zumindest eine der Eigenschaften Wärmestand, Oberflächenglanz, viskoelastische Eigenschaften wie Verlauf der Schrumpfkurve der verstreckten Folien betreffend Schrumpfbeginn, Schrumpfverlauf als Funktion der Schrumpftemperatur, Maximalschrumpf und Schrumpfkraft, Steigung der Schrumpfkurve, Rauheit, Prägestabilität so verändert wird, dass die Folien bzw. Folienbahnen ein Eigenschaftsprofil erhalten, das neue Anwendungsbereiche für die Folien und Folienbahnen erschließt.

Zur Lösung dieser Aufgabe wird erfindungsgemäß von einer Formmasse der eingangs beschriebenen Art in der Weise ausgegangen, dass die Formmasse 30 bis 97 Gew.-% Polyesterharzzusammensetzung, Wachse bis 3,0 Gew.-%,und 1,5 bis 70 Gew.-% polymere Modifizierungsmittel enthält, wobei die Gewichtsprozente auf das Gesamtgewicht der Formmasse bezogen sind und dass die ABS-Komponenten Acrylnitril-Butadien-Styrol, Alpha-Methylstyrol-Acrylnitril und/oder Styrol-Acrylnitril und deren Modifikationen sind, wobei die polymeren Modifizierungsmittel Rauheit ($R_z$-Wert), Wärmestand und/oder Glanz, Oberflächenstruktur, Schrumpfverlauf von aus der Formmasse gefertigten Folien modifizieren.

In Weiterbildung der Erfindung betragen die Anteile der Polyesterharzzusammensetzung 33,4 bis 88,8 Gew.-%, der Wachse 1 bis 2 Gew.-%, der ABS-Komponenten 5 bis 64 Gew.-% und eines Pflanzenöls 0 bis 0,6 Gew.-%, bezogen auf das Gesamtgewicht der Formmasse.

In Ausgestaltung der Erfindung betragen die Anteile der Polyesterharzzusammensetzung 90 bis 97 Gew.-%, der Mattierungsmittel bis zu 10 Gew.-% und der Wachse 1 bis 3 Gew.-%, bezogen auf das Gesamtgewicht der Formmasse. Zweckmäßiger Weise enthalten die Wachse teilverseiftes Esterwachs und/oder gesättigte unverzweigte Monocarbonsäuren und/oder Montanwachse. Bei den Monocarbonsäuren handelt es sich um Stearin- bzw. Palmitinsäure. Das zu verwendende Pflanzenöl ist zweckmäßiger Weise epoxidiertes Sojabohnenöl.

Es werden ein oder mehrere Mattierungsmittel der Polyesterharzzusammensetzung zugegeben, die aus der Gruppe Calciumcarbonat, Aluminium-, Magnesiumsilicattalk, Acrylat-Styrol-Copolymer und hochmolekulares und/oder vernetztes PVC ausgewählt sind. In einer bevorzugten Ausführungsform der Formmasse enthält sie 70 bis 74 Gew.-% Polyesterharzzusammensetzung, 23 bis 27 Gew.-% ABS-Komponenten, 2 Gew.-% Wachse und 0,6 Gew.-% Pflanzenöl. In weiteren Ausführungsformen ist der Anteil der Polyesterharzzusammensetzung an der Formmasse geringer und beträgt bevorzugt 49 bis 52 Gew.-%, während die Anteile der ABS-Komponenten 46 bis 48 Gew.-%, der Wachse 2 Gew.-% und des Pflanzenöls 0,6 Gew.-% betragen.

Zweckmäßiger Weise enthält die Formmasse 95 bis 97 Gew.-% Polyesterharzzusammensetzung, 1 bis 3 Gew.-% Mattierungsmittel und 2 Gew.-% Wachse.

Aus der Formmasse werden Folien, Folienbahnen, Profile, Platten und Formkörper hergestellt.

Im Rahmen der vorliegenden Aufgabe wird aus der Formmasse eine Folie hergestellt, die unverstreckt aus der Formmasse mit einer Dicke von 100 μm bis 1 mm kalandriert oder extrudiert ist und bei Bedarf in einem inline oder offline Verfahrensschritt in Längs- und/oder Querrichtung zur Folienbahn mit einem Streckgrad zwischen 1,1 bis 7, insbesondere 3 bis 4, verstreckt ist. In Weiterbildung der Erfindung hat die verstreckte Folie eine Dicke von 15 bis 800 μm, insbesondere von 25 bis 600 μm und bevorzugt 35 bis 500 μm.

Die Vicat A50-Erweichungstemperatur ist größer/gleich 78 °C bis 115 °C, während die Vicat B50-Erweichungstemperatur größer/gleich 75 °C bis 100 °C ist.

Weitere Eigenschaften der erfindungsgemäßen Folie ergeben sich aus den Patentansprüchen 18 bis 22.

Die Folie wird bevorzugt als Möbel- und Kartenfolie sowie als Verpackungs- und Schrumpffolie verwendet.

Die Erfindung wird im Folgenden an Hand von Folienbeispielen näher erläutert.

In der nachstehenden Tabelle 1 sind Vergleichsbeispiele 1 und 2 und erfindungsgemäße Beispiele 3 bis 7 angeführt, die sich auf Blends aus Polyesterharzzusammensetzungen mit ABS-Komponenten, Wachsen und einem Pflanzenöl beziehen. Tabelle 2 umfasst ein Vergleichsbeispiel 1 und erfindungsgemäße Beispiele 2 bis 5, die Blends aus Polyesterharzzusammensetzungen mit Mattierungsmitteln und Wachsen betreffen. In der Rezeptur der jeweiligen Folien sind die chemischen Bezeichnungen der einzelnen Folien, ihre Marken- bzw. Typenbezeichnungen und der jeweilige Lieferant angegeben.

Die Vergleichsbeispiele 1 und 2 der Tabelle 1 betreffen PET-Folien mit einem Polyesterharzanteil von mindestens 97,4 Gew.-%. Die Vergleichsbeispiele 1 und 2 enthalten keine Modifikationsmittel und als Additive nur zwei Wachse, die Gleitmittel sind. Des Weiteren ist dem Vergleichsbeispiel 1 noch ein Pflanzenöl, nämlich epoxidiertes Sojabohnenöl in sehr geringen Mengen hinzugefügt. Bei dem Polyester der Vergleichsbeispiele 1 und 2 handelt es sich um einen Polyester, wie er in der EP 1 066 339 B1 der Firma Eastman Chemical Co., Tennessee, USA offenbart und patentrechtlich geschützt ist. In den erfindungsgemäßen Beispielen 3 bis 7 nimmt der Anteil von PET in den jeweiligen PET/ABS-Blends von Beispiel 3 nach Beispiel 5 ab, während er in den Beispielen 6 und 7 größer als in Beispiel 3 ist. Als Modifizierungsmittel werden in den Beispielen 3 bis 5 zwei bis drei unterschiedliche ABS-Komponenten eingesetzt. Die Wachs-Additive der erfindungsgemäßen Beispiele 3 bis 5 entsprechen den Wachs-Additiven des Vergleichsbeispiels 1. In den erfindungsgemäßen Beispielen 6 und 7 wird jeweils nur eine einzige ABS-Komponente als Additiv dem Blend hinzu gefügt. Die Wachsanteile sind geringfügig niedriger als in den Beispielen 3 und 5. Ein Pflanzenöl enthalten die Beispiele 6 und 7 nicht.

Als Modifikator bezüglich der Schlagzugzähigkeit und des Wärmestands sowie der Maßäderung in Quer- und Längsrichtung werden bevorzugt Acrylnitril-Butadien-Styrol-Copolymerisate von beispielsweise 12,5 bis 26 Gew.-%, bezogen auf das Gesamtgewicht der Formmasse, eingesetzt. Zusätzlich wird als Modifikator bezüglich der Schlagzugzähigkeit und des Wärmestands Alpha-Methylstyrol-Acrylnitril in den erfindungsgemäßen Beispielen 3 bis 5 mit einem Anteil zwischen 12, 5 und 26 Gew.-%, bezogen auf das Gesamtgewicht der Formmasse, hinzu gefügt. Des weiteren kommt als dritter Modifikator bei den Beispielen 4 und 5 Acrylnitril-Butadien-Styrol-Polymerisat in einer Menge von 7 bis 12 Gew.-%, gleichfalls bezogen auf das Gesamtgewicht der Formmasse, zum Einsatz.

Als Gleitmittel werden vorzugsweise Wachse eingesetzt, bei denen das eine Wachs ein teilverseiftes Esterwachs ist und das andere Wachs aus gesättigten unverzweigten aliphatischen Monocarbonsäuren wie Palmitin- und Stearinsäure, besteht. Der Anteil des jeweiligen Wachses beträgt 1 Gew.-%, bezogen auf das Gesamtgewicht der Formmasse, für die erfinderischen Beispiele 3 bis 5. In den erfinderischen Beispielen 6 und 7 beträgt der Wachsanteil des einzelnen Wachses 0,6 Gew.-%. Als Gleitmittel können noch Mischungen von Komplex- und Glycerinestern und/ oder Montanwachsen verwendet werden. Die wirksame Menge an Gleitmittel beträgt üblicher Weise 0,1 bis 2,5 Gew.-%, insbesondere 0,6 und 1,0 Gew.-%.

Bei dem Polyester der Blends handelt es sich, wie schon zuvor erwähnt wurde, um ein marktübliches Produkt der Firma Eastman Chemical Co., Tennessee, USA, wie es in dem europäischen Patent EP 1 066 339 B1 beschrieben ist.

Die Formmasse kann auch mit Hilfe entsprechender Farbmittel bzw. -stoffe eingefärbt werden, wobei die Einfärbung auf weiß vorzugsweise mit Titandioxid und/oder Kreide vorgenommen wird. Ferner können handelsübliche Flammschutz- und antistatisch wirksame Additive zugesetzt werden. Ebenso können übliche Weichmacher, sonstige polymere Modifizierungsmittel auf Basis PMMA, Methyl-Butadien-Styrol (MBS), chloriertem Polyethylen (PE) und sonstige aus der PVC-Modifizierung bekannte Polymere sowie sonstige Arbeitshilfsmittel zugegeben werden. Die Aufbereitung der Formmasse, von der bei der Herstellung der Folie ausgegangen wird, erfolgt durch Mischen einer pulver-, pellet- oder granulatförmigen Polyesteresterharzzusammensetzung mit 30 bis 97 Gew.-%, bezogen auf das Gesamtgewicht der Formmasse, mit Additiven, deren Anteil 1,5 bis 70 Gew.-% beträgt. Die Formmasse wird plastifiziert, aufgeschmolzen und beim Kalandrieren zu einer Folie oder Folienbahn, die durch Hindurchführen durch Druckspaltwerkkalandrierwalzen eines Walzenkalanders, bei Temperaturen von 150 bis 250 °C der Kalandrierwalzen, ausgewalzt. Die kalandrierte Folie wird von der letzten Kalanderwalze des Walzenlcalanders abgezogen (plastisches Verstrecken) und mittels Kühlwalzen gekühlt. Nachfolgend kann die Folie in einem inline oder offline Verfahren noch in Längs- und/oder Querrichtung mit einem Streckgrad von 1, 1 bis 7 verstreckt und danach aufgewickelt werden. Die Folie wird dabei dünner und erhält ein Schrumpfvermögen, das durch die Modifikatoren im Vergleich zu den nicht modifizierten Folien, das sind Folien, die keine Modifikatoren enthalten, welche die Schlagzugzähigkeit und das Schrumpfen beeinflussen, kleiner ist.

Die Folie hat im Allgemeinen eine Dicke von 100 $\mu$m bis 1 mm und wird je nach Bedarf mit einem Streckgrad von 1,1 bis 7 auf Dickenwerte von 15 bis 800 $\mu$m Dicke gestreckt. Der Streckgrad ist der Quotient aus der Foliendicke vor dem Verstrecken und der Foliendicke nach dem Strickvorgang und beträgt bevorzugt 3 bis 4, insbesondere 3,7. Es werden bevorzugt Folien in einer Dicke von 35 bis 500 $\mu$m erhalten. Durch die Modifizierungsmittel auf Basis von ABS- oder SAN werden auch der Schrumpfverlauf und die Schrumpfkraft der verstreckten Folien vorteilhaft beeinflusst, nämlich in der Weise, dass der Schrumpf bei höheren Temperaturen einsetzt, der Schrumpf verringert und der Schrumpfverlauf abgeflacht wird.

In Tabelle 2 sind ein Vergleichsbeispiel 1 und erfindungsgemäße Beispiele 2 bis 7 zusammengestellt. Das Vergleichsbeispiel 1 bezieht sich auf eine PET-Formmasse ohne Mattierungsmittel, die 98 Gew.-% Polyesterharzzusammensetzung und 2 Gew-% Wachse enthält, während die Formmassen der erfindungsgemäßen Beispiele 2 bis 5 Mattierungsmittel mit einem Anteil von 1 bis 5 Gew.-%, 93 bis 97 Gew.-% Polyesterharzzusammensetzung und 2 Gew.-% Wachse aufweisen. Bei dem Polyester handelt es sich um einen Polyester, wie er in der EP 1 066 339 B1 der Firma Eastman Chemical Co., Tennessee, USA beschrieben und patentrechtlich geschützt ist. Es werden zwei unterschiedliche Wachse A, B verwendet, die jeweils einen Anteil von 1 Gew.- besitzen. Das Wachs A ist ein teilverseiftes Esterwachs und das Wachs B besteht aus gesättigten, unverzweigten, aliphatischen Monocarbonsäuren, hauptsächlich Palmitin- und Stearinsäure. Als Mattierungsmittel kommen Calciumcarbonat, Aluminium-Silicattalk und Acrylat-Styrol-Copolymere zum Einsatz. Die Mattierungsmittel verbessern die Temperaturbeständigkeit der Oberflächenprägung von Folien, die aus den Formmassen hergestellt werden. Bei dieser Temperaturbeständigkeit der Oberflächenprägung handelt es sich um den sogenannten Prägestand. Bevorzugt enthält die Formmasse 90 bis 97 Gew.-% Polyesterharzzusammensetzung, 0 bis 10 Gew.-% des Mattierungsmittels und 1 bis 3 Gew.-% Wachse.

Zur Bestimmung des Prägestandes wird der Glanz einer Folie bei einer bestimmten Temperatur gemessen und die Temperatur so lange erhöht, bis es zu einer Veränderung des Glanzes kommt. Diejenige Temperatur, bei der die Änderung des Glanzes auftritt, wird als Prägestand bezeichnet. Durch den Einsatz von Mattierungsmitteln wird des weiteren die Rauheit erhöht. Der $R_z$-Wert = 0,45 einer 250 $\mu$m dicken Vergleichsfolie nach der Wärmebehandlung erhöht sich bei dem erfindungsgemäßen Beispiel auf einen $R_z$-Wert = 3,13 nach der Wärmebehandlung.

Der Glanz einer 250 μm dicken Folie liegt bei einem Einfallswinkel von 20° im Bereich von 8 bis 32. Bei einem Einfallswinkel von 85° beträgt der Glanz einer 250 μm dicken Folie 65 bis 90. Der Prägestand hat sich bei den erfindungsgemäßen Folien mit einer Dicke von 250 μm gegenüber dem Vergleichsbeispiel 1 von 110 °C auf einen Bereich von 145 bis 155 °C, insbesondere 150 °C, erhöht.

An den Folien wurden folgende Eigenschaften gemessen.

1. Die Dicke wurde in Anlehnung an DIN 53370 mittels eines Tastgerätes der Firma

Mitutoyo, Japan, Typ 543/250 B bestimmt. Bei den Punktmessungen wurde die Folie zwischen den geöffneten Messflächen des Tastgerätes eingelegt, die dann anschließend stoßfrei geschlossen wurden. Die Dicke wurde von dem Tastgerät abgelesen.

2. Glanz - in Anlehnung an DIN 67530

Bei der Messung mit einem Reflektometer fällt ein paralleles Lichtbündel schräg auf die zu prüfende Oberfläche ein. Die reflektierte Strahlung wird gemessen. Für den einfallenden Strahl wird in der Norm ein unterschiedlicher Einstrahlwinkel je nach Höhe des Glanzes angewandt. Dazu wird zunächst von einem Einfallswinkel von 60° ausgegangen. Beträgt der Glanz bei einem Einfallswinkel von 60° mehr als 70, so wird der Glanz bei einem Einfallswinkel von 20° gemessen. Ist der Glanz bei einem Einfallswinkel von 60° kleiner als 30, wird im Folgenden der Glanz bei einem Einfallswinkel von 85° gemessen.

3. Prägestand

Die Bestimmung des Prägestandes erfolgt nach einem betriebsinternen Verfahren. Hierzu werden die Folien in einen Spannrahmen eingespannt und bei verschiedenen Temperaturen im Luftschrank gelagert. Nach der Herausnahme der Folien aus dem Spannrahmen wird der Glanz gemessen und mit dem ursprünglichen Glanz bei einer vorgegebenen Temperatur verglichen. Sowie eine Änderung des Glanzes festgestellt wird, gibt diejenige Temperatur, bei der die Glanzänderung erfolgt ist, den Prägestand an.

4. Rauheit

Die Rauheit ($R_z$-Wert) wird nach DIN EN ISO 4287 bestimmt. Hierzu wird die Oberfläche der Folie durch eine Diamantspitze abgetastet und ein Rauheitsprofil erstellt. Mittels mathematischer Methoden werden daraus die Rauheits-Kennwerte bestimmt.

5. Vicat A50-Messung - in Anlehnung an DIN EN ISO 306

Auf eine waagrecht liegende Probe, die ein Laminat von mehreren Folien ist und eine Dicke von 3 bis 5 mm besitzt, wird eine lange Tastspitze mit kreisförmigem Querschnitt von 1 mm$^2$ Fläche senkrecht unter einer Last von 10 N aufgesetzt. Die Temperatur, bei der diese Spitze 1 mm tief in die Probe eingedrungen ist, wird bei einer Heizrate von 50 °C pro Stunde als Vicat A50-Erweichungstemperatur definiert und gemessen.

6. Vicat B50-Messung - in Anlehnung an DIN EN ISO 306

Auf die waagrecht liegende Probe, die ein Laminat von mehreren Folien ist und eine Dicke von 3 bis 5 mm besitzt, wird eine 3 mm lange Tastspitze mit kreisförmigem Querschnitt von 1 mm$^2$ Fläche senkrecht unter einer Last von 50 N aufgesetzt. Die Temperatur, bei der diese Spitze 1 mm tief in die Probe eingedrungen ist, wird bei einer Heizrate von 50 °C pro Stunde als Vicat B50-Erweichungstemperatur definiert und gemessen.

7. Schlagzugzähigkeit

Die Messung erfolgt nach DIN EN ISO 8256 in Längs- und Querrichtung mittels eines Pendelschlagwerks. Hierbei wird die Folie durch einen einzigen Pendelschlag bis zum Bruch verstreckt. Die dabei verbrauchte Energie wird aus dem Energieverlust des Pendels bestimmt, wobei eine Korrektur für die Schleppzeiger-Reibung und die Schleuderarbeit vorgenommen wird.

8. E-Modul längs/quer

Der E-Modul wird nach DIN EN ISO 527 in Längs- und Querrichtung bestimmt. Hierzu wird ein zwischen zwei Klemmen eingespannter Folienstreifen mit einer Breite von 15 mm, einer Länge von 170 mm und einer Einspannlänge von 100 mm unter vorgegebener konstanter Vorschubgeschwindigkeit von 10 mm/min und vorgegebenen Prüfbedingungen, wie beispielsweise Normklima, gedehnt. Aus dem aufgenommenen Diagramm Zugkraft-/Längenänderung wird der Elastizitätsmodul als Anstieg der Kurve ermittelt.

9. Maßänderung quer

Diese Messung wird nach DIN 53377 durchgeführt. Hierzu wird die Folie bei vorgegebener Temperatur von 75 °C und 95 °C im Wasserbad für 30 s gelagert. Die nach dieser Zeit eingetretene Maßänderung wird bei Raumtemperatur gemessen.

10. Schrumpfbeginn

Es wird die Temperatur - gerundet auf 5 °C-Schritte - angegeben, bei der die Folie eine Maßänderung quer kleiner -1 % und eine Maßänderung quer größer als -5 % aufweist.

11. Schrumpfspannung

Die Messung der Schrumpfspannung geschieht in Anlehnung an DIN 53369. Hierbei wird ein 100 mm x 10 mm Folienstreifen in die Messapparatur, die eine Kraftmessdose enthält. bei 100 °C eingespannt und die beim Rückschrumpfen auftretende Schrumpfkraft aufgezeichnet. Anschließend wird die Schrumpfkraft in maximale Schrumpfspannung umgerechnet.

In Tabelle 1 sind die Additive, Maßeinheiten und die Foliendicke der Vergleichsbeispiele 1 und 2 sowie der erfindungsgemäßen Beispiele 3 bis 7 zusammengestellt. Dabei zeigt sich, dass für einen maximalen Streckgrad 5 und einer Strecktemperatur von 85 °C der Folie die Maßänderung quer bei 75 °C von -65 % für das Vergleichsbeispiel 2 auf -35 % und -20 % bei den erfindungsgemäßen Beispielen 6 bzw. 7 abnimmt. Insbesondere gilt, dass die Maßänderung quer nach Lagerung der Folie für 30 s in 75 °C warmem Wasser, gemessen bei Raumtemperatur, -3 bis -50 % beträgt.

Die Maßänderung quer von -76 % bei 95 °C des Vergleichsbeispiels 2 nimmt auf -60 % bzw. -40 % bei den erfindungsgemäßen Beispielen 6 und 7 ab. Ganz allgemein gilt, dass nach Lagerung der Folie für 30 s in 95 °C warmem Wasser die bei Raumtemperatur gemessen Maßänderung quer -15 bis -65 % beträgt.

Durch die Zugabe einer schlagzähmachenden Komponente wird die Schlagzugzähigkeit erhöht. Dies wird erforderlich bei erhöhtem Wärmestand, da die Schlagzugzähigkeit umso geringer ist je höher der Wärmestand ist.

Der E-Modul in Längs- und Querrichtung ändert sich nur geringfügig. Die Schlagzugzähigkeit in Längs- und Querrichtung erhöht sich deutlich, wie ein Vergleich der Werte 267/300 des Vergleichsbeispiels 1 mit den Werten 444 bis 538 kJ/m$^2$/ 398 bis 617 kJ/m$^2$ der erfindungsgemäßen Beispiele 3 bis 5 erkennen lässt. Ganz allgemein gilt, dass die Schlagzugzähigkeit in Längsrichtung im Bereich von 450 bis 550 kJ/m$^2$liegt. In Querrichtung beträgt die Schlagzugzähigkeit 350 bis 630 kJ/m$^2$. Bei der Schlagzugzähigkeit zeigt sich, dass das Beispiel 3 gegenüber den Beispielen 4 und 5 eine Folie betrifft, die einen höheren Anteil PET und einen geringen Anteil ABS-Komponenten hat und daher eine größere Schlagzugzähigkeit als die Folien der Beispiele 4 und 5 aufweist. Dieser Effekt wird durch die eher versprödend wirkenden wärmestanderhöhenden ABS-Komponenten verursacht.

Die Vicat A50-Erweichungstemperatur des Vergleichsbeispiels 1 beträgt 76 °C und steigt beim erfindungsgemäßen Beispiel 5 auf einen Wert größer 110 °C an. Allgemein gilt für die Vicat A50-Erweichungstemperatur, dass sie größer/gleich 78 °C bis 115 °C ist. Ähnlich verhält sich die Vicat B50-Erweichungstemperatur, die für das Vergleichsbeispiel 1 bei 75 °C liegt und beim Beispiel 5 auf 94 °C ansteigt. Die Vicat B50-Erweichungstemperatur beträgt im Allgemeinen 75 °C bis 100 °C.

Der Schrumpfbeginn verschiebt sich von 60 °C des Vergleichsbeispiels 1 je nach Konzentration der ABS-Komponenten auf 65 °C bis 70 °C.

Wie aus Tabelle 2 ersichtlich ist weisen die erfindungsgemäßen Folien mit einer Dicke von 250 μm einen deutlich niedrigeren Glanz bei allen Glanzwinkeln gegenüber dem Vergleichsbeispiel 1 auf. In Tabelle 2 sind jeweils die Glanzwerte der Vorder- und Rückseite der Folie angegeben. Bei dem Glanzwinkel 20° sinkt der Glanz des Vergleichsbeispiels 1 von 72,6 / 58,6 auf 46,1 / 11,4 beim Beispiel 4 und auf 14,3 / 8,9 beim Beispiel 5, in Abhängigkeit von dem jeweiligen Anteil der Mattierungskomponenten, der beim Beispiel 4 niedriger als beim Beispiel 5 ist. Der Glanz bei einem Glanzwinkel 60° liegt bei dem Vergleichsbeispiel 1 zwischen 94 bis 100 und sinkt bei den erfindungsgemäßen Beispielen auf Werte zwischen 47 und 96 ab. Für den Glanzwinkel 85° sinkt der Glanz zwischen 94 und 100 des Vergleichsbeispiels 1 auf Werte zwischen 61 und 95 ab. Der hohe Glanz bei einem Glanzwinkel 20° zeigt eine größere Absenkung als bei dem Glanzwinkel 85° an.

Der Prägestand der Folien gemäß den Beispielen 2 bis 5 konnte gegenüber der Folie des Vergleichsbeispiels 1 deutlich von 110 °C auf 150 °C erhöht werden. Die Rauheit ($R_z$-Wert) der erfindungsgemäßen Folien stieg von 0,4 $\mu$m auf 3,4 $\mu$m an. Die Folie des Vergleichsbeispiels 1 hatte beispielsweise eine Rauheit von 0,41 / 0,45 $\mu$m (Vorder-/Rückseite) und die Folie des Beispiels 4 eine Rauheit von 1,05 / 3,13 $\mu$m. Diese $R_z$-Werte liegen innerhalb des voranstehenden Bereichs für die Rauheit.

Die erfindungsgemäßen Folien werden durch Heißprägen mit einer definierten Oberfläche versehen, da sie für den Einsatz von dekorativen Möbeloberflächen bestimmt sind. Möbelfolien werden u. a. für 3D-Küchenfronten eingesetzt. Hierzu werden die Folien mit Hilfe einer Membranpresse auf eine Holzunterlage verpresst. Dabei wird die Folie je nach Verfahren einer Temperatur von 130 °C bis 150 °C ausgesetzt. Ist der Prägestand zu gering, kann die Folie relaxieren und die Prägung vermindert sich oder verschwindet gänzlich. Aus diesem Grund ist der Prägestand ein wichtiges Qualitätskriterium für Möbelfolien. Seine Erhöhung von 110 °C auf 150 °C sichert die Prägung, mit der Möbelfolien häufig ausgerüstet sind, auch noch bei Prägetemperaturen bis knapp unter 150 °C und verhindert ein Aufglänzen, d. h. eine Glanzerhöhung während Thermovorgängen.

Die Erhöhung des Prägestandes bzw. Wärmestandes der Folien, falls diese als Kartenfolien verwendet werden, macht sie auch in thermisch hoch belasteter Umgebung, wie in den Tropen und Autoinnenräumen im Hochsommer, problemlos einsetzbar.

Die Grafik zeigt den Schrumpf (negative Maßänderung) in % einer in Längsrichtung (MD) mit dem Streckfaktor 3,7 verstreckten Folie, die eine Dicke von 35 $\mu$m aufweist, in Abhängigkeit von der Temperatur. Ein negativer Schrumpfwert, der in Querrichtung auftritt, bedeutet eine Längung der Folie in Querrichtung. Ein positiver Schrumpfwert in Längsrichtung zeigt eine Verkürzung der Folie an. Die prozentuale Änderung des Schrumpfes berechnet sich aus der Maßänderung der "geschrumpften" Folie zur Ausgangsfolie, d.h. Schrumpf S = (Länge der Probe vor der Behandlung minus Länge der Probe nach der Behandlung) geteilt durch (Länge der Probe vor der Behandlung x 100)

$$S = \left( \frac{L_0 - L_v}{L_0} \right) x100.$$

Es ist ersichtlich, dass durch den Zusatz des Modifikators Baymod AT 68 in den erfindungsgemäßen Beispielen 6 und 7 der Tabelle 2 der Schrumpf in Längsrichtung gegenüber den Folien der Vergleichsbeispiele 1 und 2 geringer ist, dass der Anstieg der Schrumpfkurven weniger steil ist und dass der Schrumpfbeginn zu höheren Starttemperaturen verschoben ist.

Die höheren Schrumpfstart-Temperaturen und der flachere Anstieg der Schrumpflcurven der erfindungsgemäßen Folien erweitern das Einsatzgebiet hochschrumpfender Polyesterfolien, die bei Bedarf infolge der zusätzlichen Mattierung auch den Erhalt des Oberflächenglanzes beim Anschrumpfen infolge höherer thermischer Belastung erlauben. Insgesamt lässt sich feststellen, dass die Verwendung der voranstehend beschriebenen Additive in den PET-Blends eine höhere Flexibilität in der Gestaltung der Eigenschaftsprofile der Folien erlaubt als der Einsatz von Copolymeren, die in der Regel wesentlich teurer sind und mit denen des öfteren das gewünschte Eigenschaftsprofil der Folien nicht erzielbar ist.

Sowohl Karten- als auch Schrumpffolien enthalten jeweils einen Polyester, ABS-Komponente(n), Gleitmittel und gegebenenfalls Mattierungsmittel, während Möbelfolien einen Polyester, Gleitmittel, Mattierungsmittel und gegebenenfalls ABS-Komponente(n) aufweisen.

Die Kartenfolien nach der Erfindung besitzen einen erhöhten Wärmestand, der höhere thermische Belastungen im Gebrauchsfall zulässt. Die Schrumpffolien haben einen geringeren Schrumpf und eine höhere Schrumpf-Starttemperatur und die Möbelfolien weisen einen höheren Wärmestand der Prägung bzw. des Oberflächenglanzes auf.

Tabelle 1a

| Rezeptur | Rohstoffbeispiel (Lieferant) | Chemische Bezeichnung | Vergleichsbeispiele | | PET/ABS-Blend - erfindungsgemäße Beispiele | | | | |
|---|---|---|---|---|---|---|---|---|---|
| | | | Beisp. 1 | Beisp. 2 | Beisp. 3 | Beisp. 4 | Beisp. 5 | Beisp. 6 | Beisp. 7 |
| Polyester | Cadence (Eastman) | s. EP 1 066 339 B1 | 97,4 | 98,8 | 72,4 | 50,4 | 33,4 | 88,8 | 78,8 |
| ABS A | Baymod AT 49 (Lanxess) | Acrylnitril-Butadien-Styrol | - | - | 12,5 | 26 | 26 | - | - |
| ABS B | Baymod AT 68 (Lanxess) | Alpha-Methylstyrol-Acrylnitril | - | - | 12,5 | 14 | 26 | 10 | 20 |
| ABS C | Baymod A52 (Lanxess) | Acrylnitril-Butadien-Styrol | - | - | - | 7 | 12 | - | - |
| Wachs A | Licowax OP (Clariant) | Esterwachs, teilverseift | 1 | 0,6 | 1 | 1 | 1 | 0,6 | 0,6 |
| Wachs B | Pristerene 4900 (Unichema) | Gesättigte, unverzweigte aliphatische Monocarbonsäuren, hauptsächlich Palmitin- und Stearinsäure | 1 | 0,6 | 1 | 1 | 1 | 0,6 | 0,6 |
| | Merginat ESBO (Hobum Fettchemie) | epoxidiertes Sojabohnenöl | 0,6 | - | 0,6 | 0,6 | 0,6 | - | - |
| Streckparameter | Einheit | | | | | | | | |
| maximaler Streckgrad | ohne Einheit (Quotient aus Vorfoliendicke und Dicke nach dem Streckvorgang) | | - | 5 | - | - | - | 5 | 5 |
| Strecktemperatur (Folientemp.) | [°C] | | - | 85 | - | - | - | 85 | 85 |

Tabelle 1b

| Folieneigenschaft | Einheit | Vergleichsbeispiele | | | | PET/ABS-Blend - erfindungsgemäße Beispiele | | | | | | | | | |
|---|---|---|---|---|---|---|---|---|---|---|---|---|---|---|---|
| | | Beispiel 1 | | Beispiel 2 | | Beispiel 3 | | Beispiel 4 | | Beispiel 5 | | Beispiel 6 | | Beispiel 7 | |
| Dicke | μm | 500 | | - | | 500 | | 500 | | 500 | | - | | - | |
| Vicat A50 | °C | 76 | | - | | 89 | | 100 | | >110 | | - | | - | |
| Vicat B50 | °C | 75 | | - | | 75 | | 90 | | 94 | | - | | - | |
| Schlagzugzähigkeit (längs/quer) | kJ/m$^2$ | 267 | 300 | - | - | 538 | 617 | 444 | 448 | 487 | 398 | - | - | - | - |
| E-Modul (längs/quer) | N/mm$^2$ | 1310 | 1347 | - | - | 1431 | 1424 | 1370 | 1320 | 1389 | 1344 | - | - | - | - |
| Maßänderung quer bei 95 °C | % | - | - | - | -76 | - | - | - | - | - | - | - | -60 | - | -40 |
| Maßänderung quer bei 75 °C | % | - | - | - | -65 | - | - | - | - | - | - | - | -35 | - | -20 |
| Schrumpfbeginn | °C | - | - | - | 60 | - | - | - | - | - | - | - | 65 | - | 70 |

Tabelle 2

| Rezeptur | Rolistoftbeispiel (Lieferant) | Chemische Bezeichnung | Vergleichsbeispiel | | PET + Mattierungsmittel - erfindungsgemäße Beispiele | | | | | | | |
|---|---|---|---|---|---|---|---|---|---|---|---|---|
| | | | Beispiel 1 | | Beispiel 2 | | Beispiel 3 | | Beispiel 4 | | Beispiel 5 | |
| Polyester | Cadence (Eastman) | s. EP 1 066 339 B1 | 98 | | 93 | | 96 | | 97 | | 94 | |
| Wachs A | Licowax OP (Clariant) | Esterwachs teilverseift | 1 | | 1 | | 1 | | 1 | | 1 | |
| Wachs B | Pristerene 4900 (Unichema) | Gesättigte, unverzweigte, aliphatische Monocarbonsäuren, hauptsächlich Palmitin- u. Stearinsäure | 1 | | 1 | | 1 | | 1 | | 1 | |
| Mattierungsmittel A | Microcarb LB 10T (Revert) | Calciumcarbonat | - | | 5 | | - | | - | | 2 | |
| Mattierungsmittel B | Mistron Vapar RC10 (Luzenac) | Aluminium Silicattalk | - | | - | | 2 | | - | | 2 | |
| Mattierungsmittel C | Azemat OP 278 (Degussa) | Acrylat-Styrol Copolymer | - | | - | | - | | 1 | | - | |
| Folieneigenschaft | Einheit | | | | | | | | | | | |
| Dicke | μm | | 250 | | 250 | | 250 | | 250 | | 250 | |
| Glanz 20° | | | 72,6 | 58,6 | 65,1 | 31,7 | 26,8 | 27,1 | 46,1 | 11,4 | 14,3 | 8,9 |
| Glanz 60° | | | 99,9 | 93,7 | 90.7 | 95,7 | 70,5 | 70,3 | 86,3 | 54,9 | 47,9 | 47,9 |
| Glanz 85° | | | 99,5 | 94,3 | 94,5 | 77,7 | 90,6 | 88,2 | 90,1 | 61,6 | 68,9 | 67,9 |
| Prägestand | °C | | 110 | | 150 | | 150 | | 150 | | 150 | |
| Rz | | | 0,41 | 0,46 | 2,15 | 2,6 | 2,43 | 1,41 | 1,05 | 3,13 | 2,83 | 2,52 |

**Patentansprüche**

1. Formmasse aus einer Polyesterharzzusammensetzung, enthaltend mindestens 80 Mol% einer Disäurerestkomponente und 80 bis 100 Mol% einer Diolrestkomponente, ausgewählt aus Diolen mit 2 bis 10 C-Atomen und 0 bis 20 Mol% eines modifizierenden Diols, Wachsen, gegebenenfalls Mattierungsmitteln und polymeren Modifizierungsmitteln auf Basis von ABS-Komponenten, **dadurch gekennzeichnet, dass** die Formmasse 30 bis 97 Gew.-% Polyesterharzzusammensetzung, Wachse bis 3,0 Gew.-% und 1,5 bis 70 Gew.-% polymere Modifizierungsmittel enthält, wobei die Gewichtsprozente auf das Gesamtgewicht der Formmasse bezogen sind und dass die ABS-Komponenten Acrylnitril-Butadien-Styrol, Alpha-Methylstyrol-Acrylnitril und/oder Styrol-Acrylnitril und deren Modifikationen sind, wobei die polymeren Modifizierungsmittel Rauheit ($R_z$-Wert), Wärmestand und/oder Glanz, Oberflächenstruktur, Schrumpfverlauf von aus der Formmasse gefertigten Folien modifizieren.

2. Formmasse nach Anspruch 1, **dadurch gekennzeichnet, dass** die Anteile der Polyesterharzzusammensetzung 33,4 bis 88,8 Gew.-%, der Wachse 1 bis 2 Gew.-%, der ABS-Komponenten 5 bis 64 Gew.-% und eines Pflanzenöls 0 bis 0,6 Gew.-%, bezogen auf das Gesamtgewicht der Formmasse, betragen.

3. Formmasse nach den Ansprüchen 1 und 2, **dadurch gekennzeichnet, dass** die Anteile der Polyesterharzzusammensetzung 90 bis 97 Gew.-%, der Mattierungsmittel bis zu 10 Gew.-% und der Wachse 1 bis 3 Gew.-%, bezogen auf das Gesamtgewicht der Formmasse, betragen.

4. Formmasse nach einem der Ansprüche 1 bis 3, **dadurch gekennzeichnet, dass** die Wachse teilverseiftes Esterwachs und/oder gesättigte, unverzweigte aliphatische Monocarbonsäuren und/oder Montanwachse enthalten.

5. Formmasse nach Anspruch 4, **dadurch gekennzeichnet, dass** die Monocarbonsäuren Stearin- und Palmitinsäure sind.

6. Formmasse nach Anspruch 2, **dadurch gekennzeichnet, dass** das Pflanzenöl epoxidiertes Sojabohnenöl ist.

7. Formmasse nach Anspruch 1 oder 3, **dadurch gekennzeichnet, dass** sie ein oder mehrere Mattierungsmittel aus der Gruppe Calciumcarbonat, Aluminium- und MagnesiumSilicattalk, Acrylat-Styrol-Copolymer und hochmolekulares und/oder vernetztes PVC enthält.

8. Formmasse nach Anspruch 2, **dadurch gekennzeichnet, dass** sie 70 bis 74 Gew.-% Polyesterharzzusammensetzung, 23 bis 27 Gew.-% ABS-Komponenten, 2 Gew.-% Wachse und 0,6 Gew.-% Pflanzenöl enthält.

9. Formmasse nach Anspruch 2, **dadurch gekennzeichnet, dass** sie 49 bis 52 Gew.-% Polyesterharzzusammensetzung, 46 bis 48 Gew.-% ABS-Komponenten, 2 Gew.-% Wachse und 0,6 Gew.-% Pflanzenöl enthält.

10. Formmasse nach Anspruch 2, **dadurch gekennzeichnet, dass** sie 33,4 bis 35 Gew.-% Polyesterharzzusammensetzung, 62 bis 64 Gew.-% ABS-Komponenten, 2 Gew.-% Wachse und 0,6 Gew.-% Pflanzenöl enthält.

11. Formmasse nach Anspruch 3, **dadurch gekennzeichnet, dass** sie 92 bis 94 Gew.-% Polyesterharzzusammensetzung, 2 Gew.-% Wachse und 4 bis 6 Gew.-% Mattierungsmittel enthält.

12. Formmasse nach Anspruch 3, **dadurch gekennzeichnet, dass** sie 95 bis 97 Gew.-% Polyesterharzzusammensetzung, 2 Gew.-% Wachse und 1 bis 3 Gew.-% Mattierungsmittel enthält.

13. Folie, hergestellt aus der Formmasse gemäß einem der Ansprüche 1 bis 12, **dadurch gekennzeichnet, dass** sie unverstreckt aus der Formmasse mit einer Dicke von 100 μm bis 1 mm kalandriert oder extrudiert ist und bei Bedarf in einem inline oder offline Verfahrensschritt in Längs- und/oder Querrichtung zur Folienbahn mit einem Streckgrad zwischen 1,1 bis 7, insbesondere 3 bis 4 verstreckt ist.

14. Folie nach Anspruch 13, **dadurch gekennzeichnet, dass** die verstreckte Folie eine Dicke von 15 bis 800 μm aufweist.

15. Folie nach Anspruch 14, **dadurch gekennzeichnet, dass** die Foliendicke 25 bis 600 μm, insbesondere 35 bis 500 μm beträgt.

16. Folie nach Anspruch 14, **dadurch gekennzeichnet, dass** die Vicat A50-Erweichungstemperatur größer/gleich 78 °C bis 115 °C ist.

17. Folie nach Anspruch 14, **dadurch gekennzeichnet, dass** die Vicat B50-Erweichungstemperatur größer/gleich 75 °C bis 100 °C ist.

18. Folie nach Anspruch 14, **dadurch gekennzeichnet, dass** nach Lagerung der Folie für 30 s in 95 °C warmem Wasser die bei Raumtemperatur gemessene Maßänderung quer -15 bis -65 % beträgt.

19. Folie nach Anspruch 14, **dadurch gekennzeichnet, dass** nach Lagerung der Folie für 30 s in 75 °C warmem Wasser die bei Raumtemperatur gemessene Maßänderung quer -3 bis -50 % beträgt.

20. Folie nach Anspruch 14, **dadurch gekennzeichnet, dass** bei einer Foliendicke von 3 5 $\mu$m und einem Streckfaktor von 3,7 in Längsrichtung der Schrumpf 3 bis 50 % bei 75 °C Folientemperatur beträgt.

21. Folie nach Anspruch 14, **dadurch gekennzeichnet, dass** bei einer Foliendicke von 35$\mu$m und einem Streckfaktor von 3,7 in Längsrichtung der Schrumpf 15 bis 65 % bei 95 °C Folientemperatur beträgt.

22. Folie nach Anspruch 14, **dadurch gekennzeichnet, dass** ihr Prägestand 115° bis 170 °C beträgt.

23. Verwendung der Folie gemäß einem der Ansprüche 13 bis 22 als Verpackungs-, Schrumpf-, Möbel-, Kartenfolie.

24. Verwendung der Formmasse nach einem der Ansprüche 13 bis 22 zur Herstellung von Folien, Folienbahnen, Profilen, Platten, Formkörpern.

**Claims**

1. A molding material composed of a polyester resin composition, comprising at least 80 mol% of a diacid radical component and from 80 to 100 mol% of a diol radical component, selected from diols having from 2 to 10 carbon atoms and from 0 to 20 mol% of a modifying diol, and composed of waxes, and, if appropriate, of matting agents, and of polymeric modifiers based on the ABS components, **characterized in that** the molding material comprises from 30 to 97 % by weight of polyester resin composition, waxes up to 3.0 % by weight, and from 1.5 to 70 % by weight of polymeric modifiers, where the percentages by weight are based on the total weight of the molding material, and **in that** the ABS components are acrylonitrile-butadiene-styrene, alpha-methylstyrene-acrylonitrile, and/or styreneacrylonitrile or a modified form of these, and where the polymeric modifiers modify the roughness ($R_z$ value), heat resistance and/or gloss, surface structure, or shrinkage profile of films manufactured from the molding material.

2. The molding material as claimed in claim 1, **characterized in that** the proportions of the polyester resin composition are from 33.4 to 88.8 % by weight, the proportions of the waxes are from 1 to 2 % by weight, the proportions of the ABS components are from 5 to 64 % by weight, and the proportions of a vegetable oil are from 0 to 0.6 % by weight, based on the total weight of the molding material.

3. The molding material as claimed in claims 1 and 2, **characterized in that** the proportions of the polyester resin composition are from 90 to 97 % by weight, the proportions of the matting agents are up to 10 % by weight, and the proportions of the waxes are from 1 to 3 % by weight, based on the total weight of the molding material.

4. The molding material as claimed in any of claims 1 to 3, **characterized in that** the waxes comprise partially hydrolyzed ester wax and/or saturated, unbranched aliphatic monocarboxylic acids, and/or montan waxes.

5. The molding material as claimed in claim 4,
**characterized in that** the monocarboxylic acids are stearic acid and palmitic acid.

6. The molding material as claimed in claim 2,
**characterized in that** the vegetable oil is epoxidized soybean oil.

7. The molding material as claimed in claim 1 or 3, **characterized in that** it comprises one or more matting agents from the group of calcium carbonate, aluminum silicate talc and magnesium silicate talc, acrylatestyrene copolymer, and high-molecular-weight and/or crosslinked PVC.

8.  The molding material as claimed in claim 2, **characterized in that** it comprises from 70 to 74 % by weight of polyester resin composition, from 23 to 27 % by weight of ABS components, 2 % by weight of waxes, and 0.6 % by weight of vegetable oil.

9.  The molding material as claimed in claim 2, **characterized in that** it comprises from 49 to 52 % by weight of polyester resin composition, from 46 to 48 % by weight of ABS components, 2 % by weight of waxes, and 0.6 % by weight of vegetable oil.

10. The molding material as claimed in claim 2, **characterized in that** it comprises from 33.4 to 35 % by weight of polyester resin composition, from 62 to 64 % by weight of ABS components, 2 % by weight of waxes, and 0.6 % by weight of vegetable oil.

11. The molding material as claimed in claim 3, **characterized in that** it comprises from 92 to 94 % by weight of polyester resin composition, 2 % by weight of waxes, and from 4 to 6 % by weight of matting agent.

12. The molding material as claimed in claim 3, **characterized in that** it comprises from 95 to 97 % by weight of polyester resin composition, 2 % by weight of waxes, and from 1 to 3 % by weight of matting agent.

13. A film, produced from the molding material as claimed in any of claims 1 to 12, **characterized in that** it has been extruded or calendered in unoriented form from the molding material with thickness of from 100 $\mu$m to 1 mm, and, if necessary, in an in-line or off-line step of the process, has been oriented longitudinally and/or transversely with respect to the film web, with a degree of stretching of from 1.1 to 7, in particular from 3 to 4.

14. The film as claimed in claim 13, **characterized in that** the thickness of the oriented film is from 15 to 800 $\mu$m.

15. The film as claimed in claim 14, **characterized in that** the thickness of the film is from 25 to 600 $\mu$m, in particular from 35 to 500 $\mu$m.

16. The film as claimed in claim 14, **characterized in that** the Vicat A50 softening point is greater than or equal to 78 °C to 115 °C.

17. The film as claimed in claim 14, **characterized in that** the Vicat B50 softening point is greater than or equal to 75 °C to 100 °C.

18. The film as claimed in claim 14, **characterized in that** the transverse dimensional change measured at room temperature after storage of the film for 30 s in water at 95 °C is from -15 to -65 %.

19. The film as claimed in claim 14, **characterized in that** the transverse dimensional change measured at room temperature after storage of the film for 30 s in water at 75 °C is from -3 to -50 %.

20. The film as claimed in claim 14, **characterized in that** shrinkage is from 3 to 50 %, given a film temperature of 75 °C and a film thickness of 35 $\mu$m, and a longitudinal stretching factor of 3.7.

21. The film as claimed in claim 14, **characterized in that** shrinkage is from 15 to 65 %, given a film temperature of 95 °C and a film thickness of 35 $\mu$m, and a longitudinal stretching factor of 3.7.

22. The film as claimed in claim 14, **characterized in that** its emboss-stability temperature is from 115 ° to 170 °C.

23. The use of the film as claimed in any of claims 13 to 22 as packaging film, shrink film, furniture film, card film.

24. The use of the molding material as claimed in any of claims 13 to 22 for production of films, of film webs, of profiles, of sheets, of moldings.

**EP 1 877 471 B1**

**Revendications**

1. Masse de moulage en une composition de résine de polyester, contenant au moins 80 % en mole d'un composant de radical diacide et 80 à 100 % en mole d'un composant de radical diol, choisi parmi des diols avec 2 à 10 atomes de carbone, et 0 à 20 % en mole d'un diol modifié, des cires, le cas échéant des agents de matage et des agents polymères de modification à base de composants ABS, **caractérisée en ce que** la masse de moulage contient de 30 à 97 % en poids de composition de résine de polyester, des cires jusqu'à 3,0 % en poids et 1,5 à 70 % en poids d'agents polymères de modification, les pourcentages en poids étant rapportés au poids total de la masse de moulage, et **en ce que** les composants ABS sont de l'acrylonitrile-butadiène-styrène, de l'alpha-méthylstyrène-acrylonitrile et/ou du styrène-acrylonitrile et leurs modifications, sachant que les agents polymères de modification modifient la rugosité (valeur $R_z$), la tenue à la chaleur et/ou le brillant, la texture de surface, la rétraction des films produits à partir de la masse de moulage.

2. Masse de moulage selon la revendication 1, **caractérisée en ce que** les proportions de la composition de résine de polyester sont de 33,4 à 88,8 % en poids, celles des cires de 1 à 2 % en poids, celles des composants ABS de 5 à 64 % en poids et celles d'une huile végétale de 0 à 0,6 % en poids, rapportées au poids total de la masse de moulage.

3. Masse de moulage selon les revendications 1 et 2, **caractérisée en ce que** les proportions de la composition de résine de polyester sont de 90 à 97 % en poids, celles de l'agent de matage de jusqu'à 10 % en poids et celles des cires de 1 à 3 % en poids, rapportées au poids total de la masse de moulage.

4. Masse de moulage selon l'une quelconque des revendications 1 à 3, **caractérisée en ce que** les cires contiennent de la cire d'ester partiellement saponifiée et/ou des acides monocarboxyliques saturés non ramifiés aliphatiques et/ou des cires montaniques.

5. Masse de moulage selon la revendication 4, **caractérisée en ce que** les acides monocarboxyliques sont l'acide stéarique et l'acide palmitique.

6. Masse de moulage selon la revendication 2, **caractérisée en ce que** l'huile végétale est de l'huile de soja époxydée.

7. Masse de moulage selon la revendication 1 ou 3, **caractérisée en ce qu'**elle contient un ou plusieurs agents de matage provenant du groupe du carbonate de calcium, du talc de silicate d'aluminium et de silicate de magnésium, du copolymère acrylate-styrène et du PVC à haut poids moléculaire et/ou réticulé.

8. Masse de moulage selon la revendication 2, **caractérisée en ce qu'**elle contient 70 à 74 % en poids de composition de résine de polyester, 23 à 27 % en poids de composés ABS, 2 % en poids de cire et 0,6 % en poids d'huile végétale.

9. Masse de moulage selon la revendication 2, **caractérisée en ce que** qu'elle contient 49 à 52 % en poids de composition de résine de polyester, 46 à 48 % en poids de composés ABS, 2 % en poids de cire et 0,6 % en poids d'huile végétale.

10. Masse de moulage selon la revendication 2, **caractérisée en ce qu'**elle contient 33,4 à 35 % en poids de composition de résine de polyester, 62 à 64 % en poids de composés ABS, 2 % en poids de cire et 0,6 % en poids d'huile végétale.

11. Masse de moulage selon la revendication 3, **caractérisée en ce qu'**elle contient 92 à 94 % en poids de composition de résine de polyester, 2 % en poids de cire et 4 à 6 % en poids d'agent de matage.

12. Masse de moulage selon la revendication 3, **caractérisée en ce qu'**elle contient 95 à 97 % en poids de composition de résine de polyester, 2 % en poids de cire et 1 à 3 % en poids d'agent de matage.

13. Film, fabriqué en la masse de moulage selon l'une quelconque des revendications 1 à 12, **caractérisé en ce qu'**il est calandré ou extrudé non étiré à partir de la masse de moulage avec une épaisseur de 100 $\mu$m à 1 mm et qu'en cas de besoin, il est étiré dans une étape de procédé en ligne ou hors ligne dans la direction longitudinale et/ou dans la direction transversale au chemin du film avec un degré d'étirement compris entre 1,1 et 7, en particulier entre 3 et 4.

14. Film selon la revendication 13, **caractérisé en ce que** le film étiré présente une épaisseur de 15 à 800 $\mu$m.

**15.** Film selon la revendication 14, **caractérisé en ce que** l'épaisseur du film est de 25 à 600 μm, en particulier de 35 à 500 μm.

**16.** Film selon la revendication 14, **caractérisé en ce que** la température de ramollissement A50 de Vicat est supérieure ou égale à 78 °C jusqu'à 115 °C.

**17.** Film selon la revendication 14, **caractérisé en ce que** la température de ramollissement B50 de Vicat est supérieure ou égale à 75 °C jusqu'à 100 °C.

**18.** Film selon la revendication 14, **caractérisé en ce qu'**après stockage du film dans de l'eau chaude à 95 °C pendant 30 s, la variation dimensionnelle transversale mesurée à la température ambiante est de -15 à -65 %.

**19.** Film selon la revendication 14, **caractérisé en ce qu'**après stockage du film dans de l'eau chaude à 75 °C pendant 30 s, la variation dimensionnelle transversale mesurée à la température ambiante est de -3 à -50 %.

**20.** Film selon la revendication 14, **caractérisé en ce que** pour une épaisseur de film de 35 μm et un facteur d'étirement de 3,7 dans la direction longitudinale, la contraction est de 3 à 50 % à une température du film de 75 °C.

**21.** Film selon la revendication 14, **caractérisé en ce que** pour une épaisseur de film de 35 μm et un facteur d'étirement de 3,7 dans la direction longitudinale, la contraction est de 15 à 65 % à une température du film de 95 °C.

**22.** Film selon la revendication 14, **caractérisé en ce que** son aptitude au matriçage est comprise entre 115 et 170 °C.

**23.** Utilisation du film selon l'une quelconque des revendications 13 à 22 comme film d'emballage, comme film rétractable, comme film pour meubles, comme film pour cartes.

**24.** Utilisation de la masse de moulage selon l'une quelconque des revendications 13 à 22 pour la production de films, de bandes de film, de profilés, de plaques, de corps moulés.

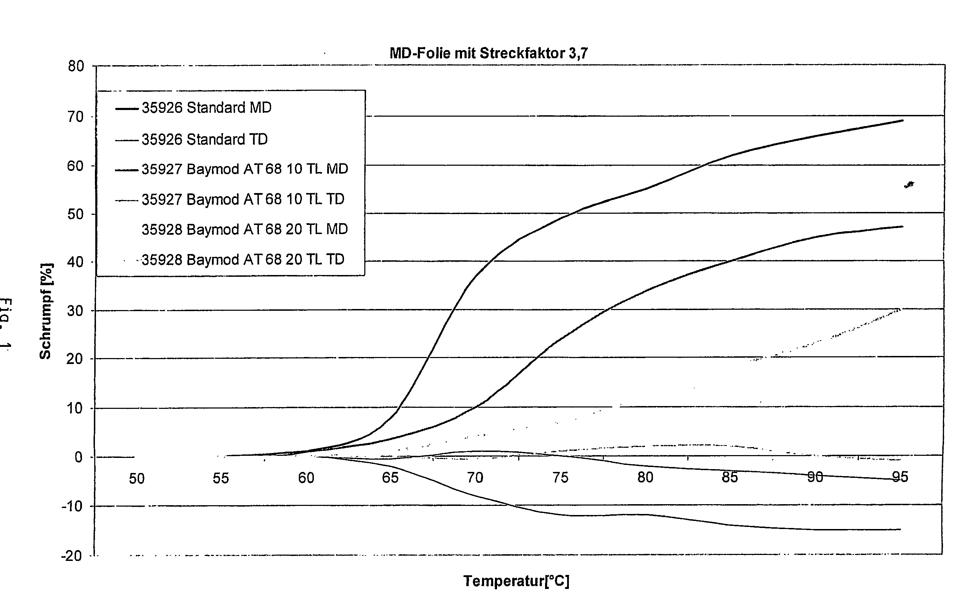

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1066339 B1
- EP 0655320 B1
- DE 10256493 A1
- DE 10058133 A1